# EUROPEAN PATENT SPECIFICATION

(11) **EP 3 575 838 B1**
(45) Date of publication and mention of the grant of the patent: **20.11.2024**
(21) Application number: 18744273.6
(22) Date of filing: 29.01.2018
(51) Int. Cl.: G02B 6/13, G02B 6/122, G02B 6/138

(54) **METHOD FOR MANUFACTURING GI OPTICAL WAVEGUIDE**
VERFAHREN ZUR HERSTELLUNG VON OPTISCHEM GI-WELLENLEITER
PROCÉDÉ DE FABRICATION D'UN GUIDE D'ONDES OPTIQUE À GRADIENT D'INDICE (GI)

(30) Priority: 27.01.2017 JP 2017013505
(43) Date of publication of application: 04.12.2019
(73) Proprietor: Keio University, Tokyo 108-8345 (JP); Nissan Chemical Corporation, Tokyo 103-6119 (JP)
(72) Inventor: ISHIGURE, Takaaki, Yokohama-shi, Kanagawa 223-8522 (JP); SAITO, Yuki, Yokohama-shi, Kanagawa 223-8522 (JP); MARUSHIMA, Chinami, Yokohama-shi, Kanagawa 223-8522 (JP); NAGASAWA, Takehiro, Funabashi-shi, Chiba 274-0052 (JP)
(74) Representative: Hoffmann Eitle
(86) International application number: PCT/JP2018/002778
(87) International publication number: WO 2018/139652

(56) References cited:
- EP-A1- 3 373 051
- WO-A1-2013/002013
- JP-A- H0 682 643
- US-A- 5 534 101
- ISHIGURE, TAKAAKI: "Polimer Optical Waveguide for High-Bandwidth-Density Om-Broad Interconnects", PROCEEDINGS OF THE IEICE GENERAL CONFERENCE; IEICE GENERAL CONFERENCE ; (TOKYO) : 2011.03.14-17 , 14 March 2011 (2011-03-14), pages SS-30 - SS-31, XP009515730

## Description

### TECHNICAL FIELD

The present invention relates to a method for manufacturing an optical waveguide, more particularly to a method for manufacturing a GI optical waveguide including a core having a substantially circular cross-sectional shape.

### BACKGROUND ART

In recent years, communication traffic has been increasing as a result of the development of cloud computing and an increase in the number of smartphone users. Thus, problems have become apparent in data servers in which transmitted information data are concentrated; for example, the data servers use a huge amount of electricity, and the processing capacities of the data servers have almost reached their limits. Therefore, technical development is urgently needed for solving such problems. In this situation, vigorous attempts have been made to develop a technique regarding an optoelectronic hybrid substrate (also referred to as "optoelectronic composite substrate") wherein electrical wiring is partially replaced by optical wiring in a server board; i.e., a technique capable of high-density and high-speed data processing.

The optoelectronic hybrid substrate requires an optical/electrical conversion element (e.g., a vertical cavity surface emitting laser (VCSEL) or a silicon photonic component), which converts electrical signals into optical signals, as well as an optical waveguide; i.e., an optical transmission line.

Optical waveguides are roughly classified into two types based on their structures: step-index type (SI type) and graded-index type (GI type). SI optical waveguides have been conventionally used in view of their processability. In an SI optical waveguide, a core and a cladding form a clear refractive index interface, and light propagates by reflection at the interface. Meanwhile, a GI optical waveguide has a structure such that the refractive index is highest at the center of a core and gradually decreases toward the outside of the core, and thus light is guided and propagates only in the vicinity of the center of the core. Therefore, a GI optical waveguide is advantageous in that no crosstalk occurs even when the pitch between cores is reduced, and interfacial reflection causes no propagation loss in theory. Thus, a GI optical waveguide is considered as being ideal for an optoelectronic hybrid substrate requiring a high-density and long-distance optical waveguide.

However, a GI optical waveguide is considerably difficult to manufacture, and only a few manufacturing methods therefor have been reported. A few known methods for manufacturing a GI optical waveguide include a method in which a specific norbornene resin and an epoxy compound are irradiated with light to thereby induce diffusion of the photolytes and the photocurable epoxy compound for generation of a refractive index gradient (Patent Document 1). A simple and versatile method has also been reported; i.e., an injection method (so-called "Mosquito method") in which a core-forming photocurable resin is injected for wire drawing into a cladding-forming photocurable resin with a dispenser (Patent Document 2).

### Prior Art Documents

### Patent Documents

Patent Document 1: Japanese Patent Application Publication No. 2012-198488 (JP 2012-198488 A)
Patent Document 2: International Publication WO 2013/002013 pamphlet Further related art may be found in post-published document EP 3 373 051 A1 directed to a composition for an optical waveguide.

### SUMMARY OF THE INVENTION

### Problems to be Solved by the Invention

The aforementioned Mosquito method is very simple and versatile. However, since the method involves injection of a core-forming photocurable resin into an uncured cladding, the cross-sectional shape of a core is difficult to be controlled, and the resultant core may have a distorted cross-sectional shape. In the case of a distorted optical waveguide, since the core has an irregular circular cross-sectional shape at the emission interface of the optical waveguide, the light intensity distribution extends over the entire emission interface, and thus light cannot be confined in the vicinity of the center of the core. Consequently, the optical waveguide exhibits an increase in insertion loss. Thus, a demand has arisen for a method for manufacturing a GI optical waveguide having a substantially circular cross-sectional shape and exhibiting reduced insertion loss.

### Means for Solving the Problems

The present inventors have conducted extensive studies for solving the aforementioned problems, and as a result have found that a GI optical waveguide including a core having a substantially circular cross-sectional shape can be formed by specifying the range of the ratio of the viscosity of a core-forming photocurable resin to that of a cladding-forming photocurable resin. The present invention has been accomplished on the basis of this finding.

Accordingly, the invention is defined by the manufacturing method in appended claim 1. The dependent claims describe optional features and distinct embodiments.

### Effects of the Invention

The method for manufacturing an optical waveguide of the present invention can manufacture a GI optical waveguide including a core having a substantially circular cross-sectional shape. Thus, the method can manufacture a GI optical waveguide exhibiting reduced insertion loss.

### BRIEF DESCRIPTION OF THE DRAWINGS

[FIG. 1] FIG. 1 shows a step of manufacturing an optical waveguide (part 1).
[FIG. 2] FIG. 2 shows a step of manufacturing the optical waveguide (part 2).
[FIG. 3] FIG. 3 shows a step of manufacturing the optical waveguide (part 3).
[FIG. 4] FIG. 4 shows a step of manufacturing the optical waveguide (part 4).
[FIG. 5] FIG. 5 shows a step of manufacturing the optical waveguide (part 5).
[FIG. 6] FIG. 6 shows a step of manufacturing the optical waveguide (part 6).
[FIG. 7] FIG. 7 shows a step of manufacturing the optical waveguide (part 7: plan view of an optical waveguide 10).
[FIG. 8] FIG. 8 shows a step of manufacturing the optical waveguide (part 8: cross-sectional view of FIG. 7 taken along line A-A).
[FIG. 9] FIG. 9 shows a step of manufacturing the optical waveguide (part 9: cross-sectional view of FIG. 7 taken along line B-B).
[FIG. 10] FIG. 10 shows ¹H NMR spectra of reactive silicone compound (SC1) manufactured in Manufacturing Example 1.
[FIG. 11] FIG. 11 shows ¹H NMR spectra of reactive silicone compound (SC2) manufactured in Manufacturing Example 2.
[FIG. 12] FIG. 12 is a cross-sectional photograph showing the results of observation of an optical waveguide produced in Example 1 with a digital microscope (transparent mode).
[FIG. 13] FIG. 13 is a cross-sectional photograph showing the results of observation of an optical waveguide produced in Example 2 with a digital microscope (transparent mode).
[FIG. 14] FIG. 14 is a cross-sectional photograph showing the results of observation of an optical waveguide produced in Example 3 with a digital microscope (transparent mode).
[FIG. 15] FIG. 15 is a cross-sectional photograph showing the results of observation of an optical waveguide produced in Comparative Example 1 with a digital microscope (transparent mode).
[FIG. 16] FIG. 16 is a cross-sectional photograph showing the results of observation of an optical waveguide produced in Comparative Example 2 with a digital microscope (transparent mode).

### MODES FOR CARRYING OUT THE INVENTION

### <<Method for Manufacturing Optical Waveguide>>

The method for manufacturing an optical waveguide of the present invention is defined in claim 1.

In the manufacturing method of the present invention, a series of the first step, the second step, and the third step may be repeated between the third step and the fourth step, to thereby form a plurality of uncured cores surrounded by the uncured cladding, and then the fourth step of curing the uncured cladding and the uncured cores may be performed.

As described below, according to the method for manufacturing an optical waveguide of the present invention the ratio of the viscosity of the material for forming the uncured core to the viscosity of the uncured cladding is 1.5 to 6 at the temperature in the second step. The second step can be performed generally at room temperature, and thus the viscosities of the uncured cladding and core correspond to those at, for example, 25°C ± 5°C. The viscosity ratio is preferably 1.5 to 4.

The adjustment of the viscosity ratio to fall within a range of 1.5 to 6 enables formation of a GI optical waveguide including a core having a substantially circular cross-sectional shape, and thus leads to manufacturing of a GI optical waveguide exhibiting reduced insertion loss.

As used herein, the term "substantially circular" refers to a shape having an aspect ratio of 0.8 or more as calculated from the maximum width (horizontal direction) and the maximum height (vertical direction) in a cross section of the core, wherein the aspect ratio corresponds to the ratio of the smaller value of the maximum width and the maximum height to the larger value of the maximum width and the maximum height (i.e., the maximum aspect ratio is 1 in the case of a true circle). The aspect ratio is particularly preferably 0.9 or more from the viewpoint of achieving an optical waveguide exhibiting further reduced insertion loss.

For example, a series of actual steps of manufacturing the optical waveguide of the present invention will next be described in detail.

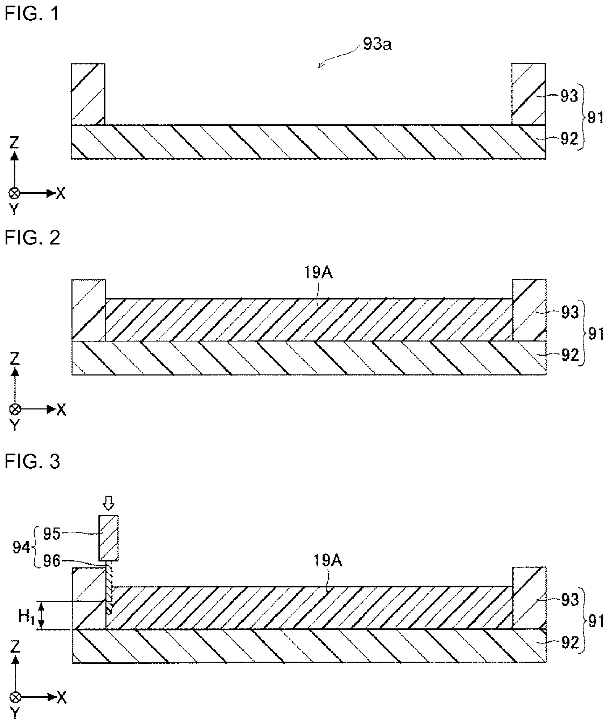

FIGS. 1 to 6 show a portion of the steps of manufacturing the optical waveguide, and these manufacturing steps may be collectively referred to as "injection method."

Firstly, in the step shown in FIG. 1, a support 91 is provided. The support 91 is a member including a bottom plate 92 having a substantially rectangular planar shape, and an outer frame 93 having a substantially frame-like planar shape and an opening 93a, wherein the outer frame 93 is detachably disposed at the periphery of the bottom plate 92. Each of the bottom plate 92 and the outer frame 93 may be formed of a material such as resin (e.g., acrylic resin), glass, silicon, ceramic, or metal. The bottom plate 92 and the outer frame 93 are not necessarily formed of the same material. The bottom plate 92 preferably has a very flat upper surface.

Subsequently, in the step shown in FIG. 2, a predetermined material is applied onto the upper surface of the bottom plate 92 exposed within the outer frame 93 of the support 91, and the material is uniformly spread to thereby form an uncured cladding 19A having a substantially constant thickness.

The uncured cladding 19A can be formed by application of a cladding-forming material described below with, for example, an application apparatus (e.g., a dispenser) or a printing apparatus, or by charging (injection) of the cladding-forming material into the opening 93a. The material of the uncured cladding 19A (cladding-forming material) may contain a light-absorbing material, such as carbon black.

No particular limitation is imposed on the viscosity of the uncured cladding 19A, and the viscosity may be adjusted so that the ratio of the viscosity of an uncured core described below to the viscosity of the uncured cladding 19A becomes 1.20 to 6.

The thickness of the uncured cladding 19A may be arbitrarily determined depending on, for example, the diameters of cores 11 to 14 described below or manufacturing conditions. The thickness is preferably about several millimeters, more preferably about 50 to 1,000 µm.

Subsequently, in the step shown in FIG. 3, an application apparatus (not illustrated) including a discharge unit 94 (having a discharge unit body 95 and an acicular section 96) is provided, and the application apparatus (not illustrated) is operated to thereby insert a portion of the acicular section 96 at the tip of the discharge unit 94 into the uncured cladding 19A (first step). The height H₁ from the upper surface of the bottom plate 92 of the support 91 to the tip end of the acicular section 96 may be appropriately determined, and may be, for example, about 100 to 1,000 µm (in the case where the thickness of the uncured cladding 19A is about several millimeters).

The application apparatus (not illustrated) includes, for example, CPUs and memories, and the apparatus is programmed so as to have a function to accurately move the discharge unit 94 at a predetermined speed in X, Y, and Z directions with respect to the uncured cladding 19A. The acicular section 96 has, for example, an annular cross-sectional shape, and the application apparatus (not illustrated) has a function to discharge a predetermined material from the annular acicular section 96 at a predetermined discharge pressure. The inner diameter of the annular acicular section 96 may be appropriately determined, and may be, for example, about 100 to 200 µm. The acicular section 96 may have a square cross-sectional shape instead of an annular cross-sectional shape. The application apparatus (not illustrated) may include, for example, a desktop application robot or a dispenser.

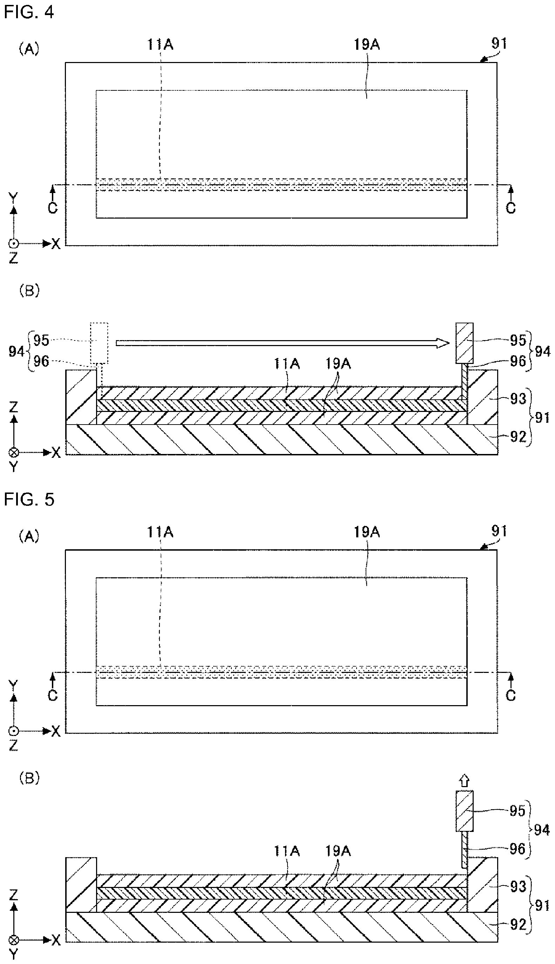

Subsequently, in the step shown in FIG. 4, the application apparatus (not illustrated) is operated to move the acicular section 96 within the uncured cladding 19A while a material for forming an uncured core (i.e., a core-forming material described below) is discharged from the acicular section 96 inserted in the uncured cladding 19A, to thereby form an uncured core 11A (second step).

FIG. 4(A) is a plan view, and FIG. 4(B) is a cross-sectional view of FIG. 4(A) taken along line C-C. The illustration of the discharge unit 94 is omitted in FIG. 4(A). The moving direction of the acicular section 96 can be appropriately determined, and FIG. 4(A) shows the case where the acicular section 96 is moved only in the X direction. The moving speed of the acicular section 96 is appropriately determined to be 5 to 30 mm/s and/or the discharge pressure of the acicular section 96 is determined to be 10 to 1,000 kPa.

The viscosity of the uncured core 11A is determined so that the ratio of the viscosity of the uncured core 11A to that of the uncured cladding 19Abecomes 1.5 to 6.

The moving speed of the discharge unit 94, the discharge pressure of the acicular section 96, or the inner diameter of the annular acicular section 96 can be adjusted in accordance with the properties (e.g., viscosity) of the material for forming the uncured core 11A (core-forming material) or the material for forming the uncured cladding 19A (cladding-forming material), to thereby enable the uncured core 11A to have a substantially circular (nearly true circular) cross-sectional shape, and to form a core 11 through the curing step described below such that the refractive index is highest at the center and decreases toward the outer periphery. The diameter of the uncured core 11A having a substantially circular cross-sectional shape may be, for example, about 5 to 200 µm.

While the core-forming material is discharged, the moving speed of the discharge unit 94 or the discharge pressure of the acicular section 96 can be varied with, for example, programming, to thereby form a core 11 having portions with different diameters (spot size conversion).

The moving speed of the discharge unit 94 or the discharge pressure of the acicular section 96 can be adjusted in accordance with the properties (e.g., viscosity) of the material for forming the uncured core 11A (core-forming material) or the material for forming the uncured cladding 19A (cladding-forming material), to thereby form the uncured core 11A having a substantially circular (cross-sectional) shape with a diameter smaller than the inner diameter of the annular acicular section 96.

This is achieved by adjusting the viscosities of these materials, and discharging the more viscous material for forming the uncured core 11A from the acicular section 96, to thereby increase the frictional force between the material and the inner surface of the annular acicular section, so that the material is less likely to be discharged in the vicinity of the inner surface of the annular acicular section; i.e., the material is preferentially discharged only in the vicinity of the center of the annular acicular section where no friction occurs between the material and the inner surface of the annular acicular section.

The step shown in FIG. 4 can be generally performed at room temperature. The temperature may be adjusted with a temperature controller (not illustrated), such as a cooling plate. In particular, the temperature is preferably adjusted to, for example, 10 to 20°C in the case of formation of the core 11A having a small diameter of 10 µm or less.

In the step shown in FIG. 4, the support 91 on which the uncured cladding 19A has been formed is fixed, and the acicular section 96 is moved within the uncured cladding 19A, to thereby form the uncured core 11A. However, the present invention is not limited to such an embodiment. For example, the acicular section 96 may be fixed, and the support 91 on which the uncured cladding 19A has been formed may be moved, to thereby form the uncured core 11A.

Subsequently, in the step shown in FIG. 5, the discharge unit 94, which has been in a state shown in FIG. 4, is moved in the Z direction, to thereby remove the acicular section 96 from the uncured cladding 19A (third step).

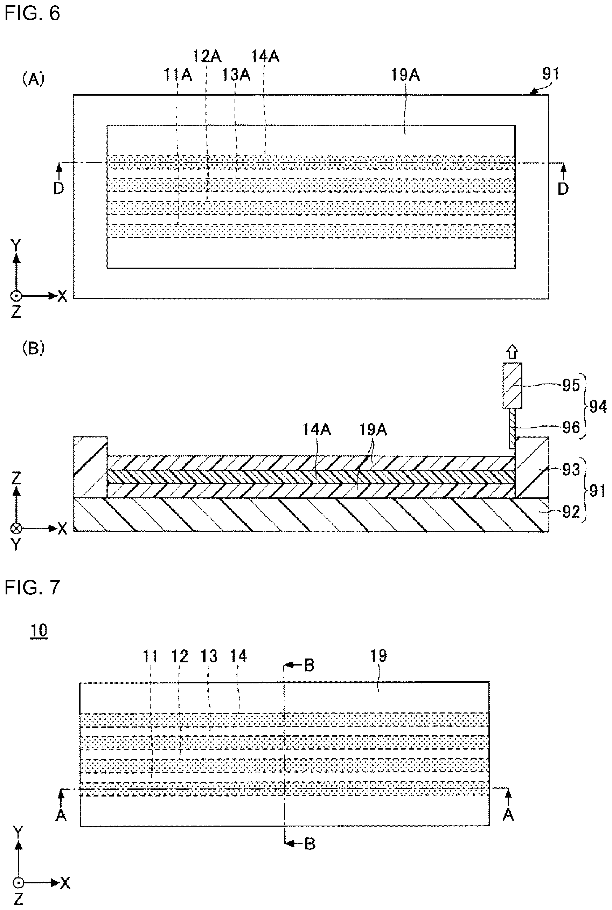

Thereafter, the step shown in FIG. 3 (i.e., insertion of the acicular section 96 into the uncured cladding 19A), the step shown in FIG. 4 (i.e., formation of the uncured core 11A), and the step shown in FIG. 5 (i.e., removal of the acicular section 96 from the uncured cladding 19A) may be repeated, to thereby form uncured cores 12A, 13A, and 14A in parallel with the uncured core 11A as shown in FIG. 6. The core-forming material of the uncured cores 12A, 13A, and 14A may be the same as that of the uncured core 11A. Alternatively, different core-forming materials may be used in combination. In the case where a plurality of cores are formed, the pitch between adjacent cores may be adjusted to, for example, about 20 to 300 µm.

As described above, the uncured cladding 19A has appropriate fluidity (viscosity), and thus no trace remains on the uncured cladding 19A even after removal of the acicular section 96 therefrom, and after formation of the uncured cores 11A, 12A, 13A, and 14A, no interface is formed between these cores and the uncured cladding 19A.

FIG. 5(A) and FIG. 6(A) are plan views, and FIG 5(B) or FIG. 6(B) is a cross-sectional view of FIG. 5(A) taken along line C-C or FIG. 6(A) taken along line D-D, respectively. In each of FIGS. 5(A) and 6(A), the illustration of the discharge unit 94 is omitted.

After the steps shown in FIGS. 5 and 6 (not illustrated), the uncured cores 11A, 12A, 13A, and 14A and the uncured cladding 19A are cured by a predetermined method described below; i.e., irradiation with light (e.g., ultraviolet rays) or thermal treatment (fourth step). In the case of use of a material that is not completely cured only by irradiation with light, the material may be further heated after being irradiated with light.

In the case of the aforementioned photocuring, the actinic rays used for photoirradiation may be, for example, ultraviolet rays, electron beams, or X-rays. Examples of the light source usable for ultraviolet irradiation include sunlight, a chemical lamp, a low-pressure mercury lamp, a high-pressure mercury lamp, a metal halide lamp, a xenon lamp, and a UV-LED. After the photo irradiation, postbaking may optionally be performed. Specifically, the photoirradiated product may be heated with, for example, a hot plate or an oven generally at 50 to 300°C for 1 to 120 minutes, to thereby complete the curing (polymerization).

In the case of the aforementioned thermal curing, no particular limitation is imposed on the heating conditions. Generally, the heating conditions are appropriately determined within ranges of 50 to 300°C and 1 to 120 minutes. Examples of the heating means include, but are not particularly limited to, a hot plate and an oven.

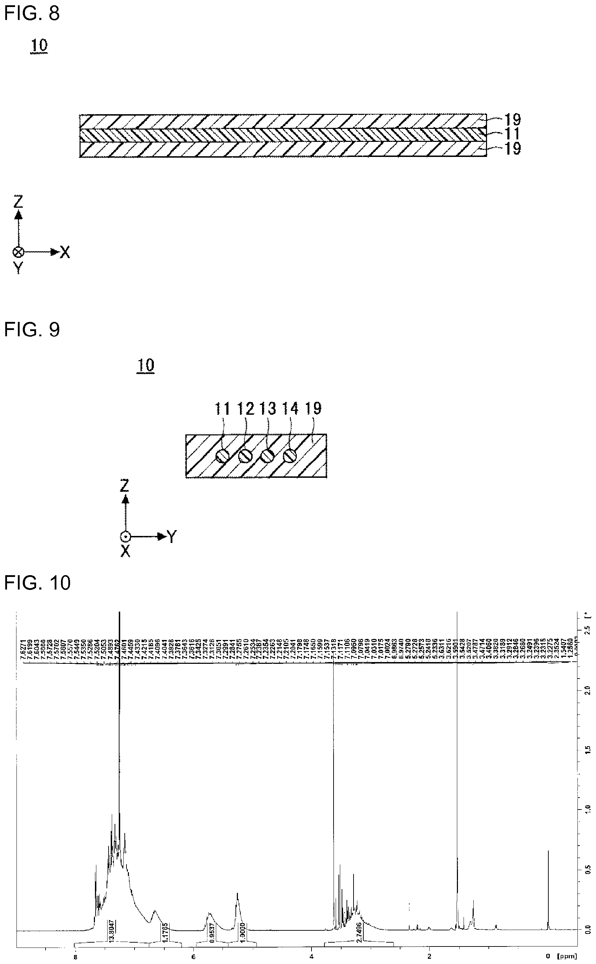

This curing step causes polymerization/curing of the uncured cores 11A, 12A, 13A, and 14Aand the uncured cladding 19A, resulting in formation of cores 11, 12, 13, and 14 and a cladding 19 (see an optical waveguide 10 in FIGS. 7 to 9: FIG. 7 is a plan view of the optical waveguide 10; FIG. 8 is a cross-sectional view of FIG. 7 taken along line A-A; and FIG. 9 is a cross-sectional view of FIG. 7 taken along line B-B). Each of the cores 11 to 14 is continuously and integrally formed without formation of an interface in the interior thereof. The cladding 19 is integrally formed without formation of an interface in the interior thereof.

In the present embodiment, the support 91 is provided for manufacturing of the optical waveguide. However, the support 91 is not necessarily provided. For example, the uncured cladding 19A may be formed in a concave portion provided in an integrated circuit or a printed board. Alternatively, the support may be substituted by a groove or slit formed in the printed board.

The present embodiment corresponds to the case where one discharge unit 94 is used. However, the present invention is not limited to such an embodiment. For example, a core-forming material may be discharged simultaneously from a plurality of discharge units 94 to thereby simultaneously form a plurality of uncured cores (e.g., 11A to 14A).

### <Cladding-Forming Material and Core-Forming Material>

In the aforementioned manufacturing method, the cladding-forming material and the core-forming material can be appropriately selected from various materials used for forming claddings and cores of conventional optical waveguides, so long as the ratio of the viscosity of the core-forming material for forming the uncured core to the viscosity of the uncured cladding (i.e., the viscosity of the cladding-forming material for forming the uncured cladding) falls within a predetermined range at the temperature in the second step as described above.

Specifically, the cladding-forming material exhibits a refractive index lower than that of the center of a core formed from the core-forming material. Each of the cladding-forming material and the core-forming material is cured by photoirradiation or thermal treatment in the aforementioned fourth step, and can be appropriately selected from, for example, materials containing silicone resin, acrylic resin, vinyl resin, epoxy resin, polyimide resin, polyolefin resin, or polynorbornene resin as a main component. The cladding-forming material may contain a light-absorbing material, such as carbon black.

In the manufacturing method of the present invention, a polymerizable composition containing a reactive silicone compound having a specific structure in combination with a compound having an alkenyl group and/or a (meth)acrylic group can be suitably used as the cladding-forming material and/or core-forming material for the optical waveguide.

More specifically, a polymerizable composition described in, for example, International Publication WO 2012/097836 pamphlet can be selected as the cladding-forming material or the core-forming material in consideration of the intended refractive index or viscosity.

Each of the aforementioned cladding-forming material and core-forming material used in the present invention preferably has a viscosity suitable for effective formation of the optical waveguide by the manufacturing method of the present invention.

For example, the cladding-forming material preferably has a viscosity of 500 to 20,000 mPa·s at 25°C, and the core-forming material preferably has a viscosity of 600 to 120,000 mPa·s at 25°C.

As described above, in the manufacturing method of the present invention, the ratio of the viscosity of the material for forming the uncured core to the viscosity of the uncured cladding must fall within a predetermined range (1.5 to 6) at the temperature in the second step. Thus, the viscosity of the cladding-forming material for forming the cladding and the viscosity of the core-forming material for forming the core may be determined so as to satisfy the aforementioned viscosity ratio.

### Examples

The present invention will next be described in more detail by way of examples, but the present invention is not limited to the following examples.

In the examples, the following apparatuses and conditions were used for preparation of samples and analysis of properties.

### (1) Stirring and defoaming apparatus

Apparatus: planetary centrifugal mixer Awatori Rentaro (registered trademark) ARE-310, available from THINKY CORPORATION

### (2) ¹H NMR

Apparatus: AVANCE III HD, available from Burker
Measurement frequency: 500 MHz
Measurement solvent: CDCl₃
Reference material: tetramethylsilane (0.00 ppm)

### (3) Gel permeation chromatography (GPC)

Apparatus: Prominence (registered trademark) GPC system, available from SHIMADZU CORPORATION
Column: Shodex (registered trademark) GPC KF-804L and GPC KF-803L, available from Showa Denko K.K.
Column temperature: 40°C
Solvent: tetrahydrofuran
Detector: RI
Calibration curve: standard polystyrene

### (4) Viscosity

Apparatus: MCR rheometer MCR302, available from Anton Paar
Measurement system: cone plate (diameter: 25 mm, angle: 2°)
Temperature: 25°C
Rotation speed: 1 rpm
Waiting time: 5 minutes

### (5) Digital microscope

Apparatus: VHX-5000 series, available from KEYENCE CORPORATION

The following abbreviations have the indicated meanings.
DPSD: diphenylsilanediol [available from Tokyo Chemical Industry Co., Ltd.]
STMS: trimethoxy(4-vinylphenyl)silane [available from Shin-Etsu Chemical Co., Ltd.]
DOG: dioxane glycol diacrylate [NK Ester A-DOG, available from Shin Nakamura Chemical Co., Ltd.]
DVB: divinylbenzene [DVB-810, purity: 81%, available from NIPPON STEEL & SUMIKIN CHEMICAL CO., LTD.] I127:
   2-hydroxy-1-(4-(4-(2-hydroxy-2-methylpropionyl)benzyl)phenyl)-2-methylpropan-1-one [IRGACURE (registered trademark) 127, available from BASF Japan Ltd.]
TPO: diphenyl(2,4,6-trimethylbenzoyl)phosphine oxide [IRGACURE (registered trademark) TPO, available from BASF Japan Ltd.]

### [Manufacturing Example 1] Manufacturing of Reactive Silicone Compound (SC1)

A 1 L eggplant-shaped flask equipped with a condenser was charged with 177 g (0.80 mol) of DPSD, 179 g (0.80 mol) of STMS, and 141 g of toluene, and air in the flask was purged with nitrogen by using a nitrogen balloon. The reaction mixture was heated to 50°C, and then 0.303 g (1.6 mmol) of barium hydroxide monohydrate [available from Aldrich] was added to the flask. The mixture was further stirred at 50°C for two days for dealcoholization condensation. The resultant reaction mixture was cooled to room temperature (about 23°C), and insoluble matter was removed with a membrane filter having a pore size of 0.2 µm. Toluene and methanol (i.e., a byproduct) were distilled off from the reaction mixture with a rotary evaporator under reduced pressure at 50°C, to thereby produce 305 g of reactive silicone compound (SC1) as a colorless transparent oily product.

FIG. 10 shows ¹H NMR spectra of the produced reactive silicone compound. The compound was found to have a weight average molecular weight Mw of 1,300 in terms of polystyrene as determined by GPC and a degree of distribution Mw/Mn of 1.2.

### [Manufacturing Example 2] Manufacturing of Reactive Silicone Compound (SC2)

A 200 mL eggplant-shaped flask equipped with a condenser and a Dean-Stark apparatus was charged with 43.3 g (0.20 mol) of DPSD, 44.9 g (0.20 mol) of STMS, and 35 g of toluene, and air in the flask was purged with nitrogen by using a nitrogen balloon. The reaction mixture was heated to 50°C, and then 38 mg (0.2 mmol) of barium hydroxide monohydrate [available from Aldrich] was added to the flask. The mixture was stirred at 50°C for one hour, and then further heated to 85°C. Thereafter, while by-produced methanol was removed to the outside of the reaction system, the mixture was stirred for five hours for dealcoholization condensation. The resultant reaction mixture was cooled to room temperature (about 23°C), and insoluble matter was removed with a membrane filter having a pore size of 0.2 µm. Toluene was distilled off from the reaction mixture with a rotary evaporator under reduced pressure at 50°C, to thereby produce 74.9 g of reactive silicone compound (SC2) as a colorless transparent oily product.

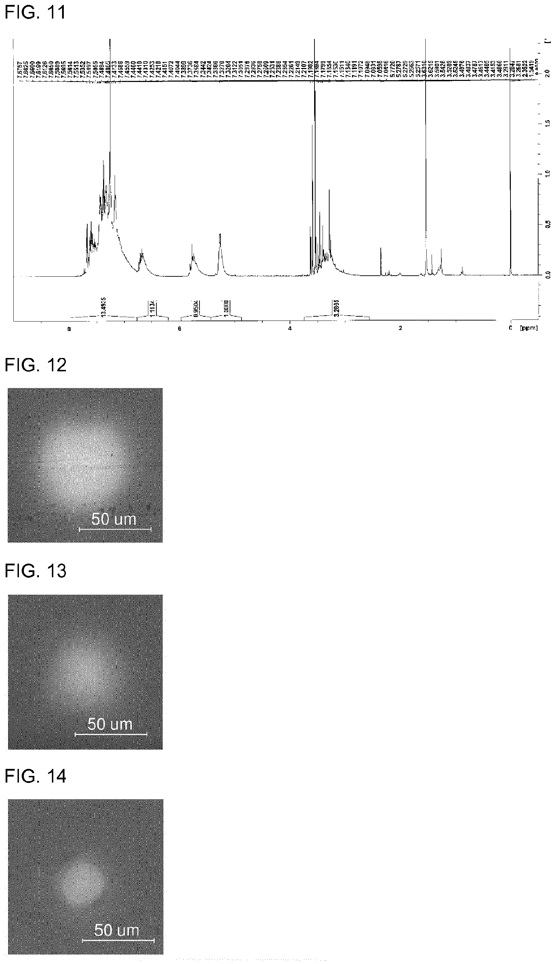

FIG. 11 shows ¹H NMR spectra of the produced reactive silicone compound. The compound was found to have a weight average molecular weight Mw of 1,600 in terms of polystyrene as determined by GPC and a degree of distribution Mw (weight average molecular weight)/Mn (number average molecular weight) of 1.2.

### [Manufacturing Example 3] Preparation of Curable Composition 1

98.6 Parts by mass of SC1 manufactured in Manufacturing Example 1, 1.4 parts by mass of DVB, and 1 part by mass of TPO were mixed together with stirring at 50°C for three hours. The mixture was further stirred and defoamed for two minutes to thereby prepare curable composition 1.

The resultant composition was found to have a viscosity of 51,300 mPa·s at 25°C.

### [Manufacturing Examples 4 to 6] Preparation of Curable Compositions 2 to 4

Curable compositions 2 to 4 shown in Table 1 were prepared in the same manner as in Manufacturing Example 3. The viscosities of the resultant compositions at 25°C are also shown in Table 1.

**Table 1**

| | SC1 [Parts by mass] | SC2 [Parts by mass] | DVB [Parts by mass] | DOG [Parts by mass] | TPO [Parts by mass] | I127 [Parts by mass] | Viscosity [mPa·s] |
|---|---|---|---|---|---|---|---|
| Curable composition 1 | 98.6 | | 1.4 | | 1 | | 51,300 |
| Curable composition 2 | | 87.5 | | 12.5 | 1 | 1 | 9,000 |
| Curable composition 3 | 93.06 | | 6.94 | | 3 | | 4,700 |
| Curable composition 4 | | 75 | | 25 | 1 | 1 | 3,800 |

### [Example 1] Production of GI Optical Waveguide

An optical waveguide including one channel core in a cladding was produced under the conditions shown in Table 2. The details will be described below (see FIGS. 1 to 5).

A silicone rubber sheet (thickness: 500 µm) (FIG. 1: outer frame 93) having, at its center, a 10 cm × 1 cm opening (FIG. 1: opening 93a) was attached to a 15 cm × 3 cm glass substrate (thickness: 3 mm) (FIG. 1: bottom plate 92), and curable composition 2 serving as a cladding-forming material was added to the opening. The glass substrate was inclined by about 45° with respect to the horizontal direction and then allowed to stand still for 30 minutes, to thereby uniformly fill the opening with the cladding-forming material. Thus, an uncured cladding (FIG. 2: uncured cladding 19A) was formed.

The glass substrate filled with the cladding-forming material was attached to a worktable of a desktop application robot [SHOTMASTER (registered trademark) 300DS-S, available from Musashi Engineering, Inc.]. Curable composition 1 serving as a core-forming material was charged into a 5 mL UV block syringe [PSY-5EU-OR, available from Musashi Engineering, Inc.] (FIG. 3: discharge unit 94), followed by defoaming. A metallic needle having an inner diameter of 150 µm [SN-30G-LF, available from Musashi Engineering, Inc.] (FIG. 3: acicular section 96) was connected to a syringe discharge unit (FIG. 3: discharge unit body 95), and the UV block syringe was attached to the desktop application robot.

Subsequently, the position of the discharge unit was adjusted so that the height (FIG. 3: H₁) from the upper surface of the glass substrate to the tip end of the metallic needle was 270 µm. Thereafter, the discharge pressure of a dispenser [ML-808GXcom, available from Musashi Engineering, Inc.] was set at 550 kPa, and the line drawing speed of the desktop application robot (the moving speed of the discharge unit) was set at 14 mm/second. The discharge program of the desktop application robot was executed to thereby discharge curable composition 1 (i.e., core-forming material) into curable composition 2 (i.e., cladding-forming material) at a height of 270 µm from the upper surface of the glass substrate to the tip end of the metallic needle, so as to achieve a length of an optical waveguide of 9.5 cm. Thus, an uncured core (FIG. 4: uncured core 11A) was formed, and then the metallic needle was removed from the uncured cladding (FIG. 5). Immediately after completion of the drawing of the core, the tip of an optical fiber light guide connected to a UV light source [200 W mercury-xenon lamp, EXECURE 4000-D, available from HOYA CANDEO OPTRONICS CORPORATION] mounted on the desktop application robot was swept three times at a speed of 20 mm/second, and UV rays were applied at an illuminance of 1,000 mW/cm² (365 nm detection). Thus, the uncured core and the uncured cladding were cured to thereby form a core and a cladding. The aforementioned operation was performed at room temperature (about 25°C).

Thereafter, the silicone rubber sheet was separated from the glass substrate with a razor, followed by heating with an oven at 150°C for 20 minutes. A cross section of the optical waveguide was exposed with a razor, and the end surface thereof was polished with polishing paper for optical fiber, to thereby produce a GI optical waveguide having a length of 5 cm.

The resultant optical waveguide was vertically placed on a stage of a digital microscope and irradiated with light from a white light source disposed below the optical waveguide, to thereby observe the cross-sectional shape of the optical waveguide by a transparent mode. The results are shown in FIG. 12. The cross-sectional shape was evaluated according to the following criteria. The results are shown in Table 2.

### [Cross-sectional shape]

A: substantially circular shape
C1: horizontally elliptical shape with upper concave portion
C2: vertically elliptical shape with upper convex portion

### [Aspect ratio]

The cross-sectional photograph was analyzed with image processing software [Image J, available from National Institutes of Health] to thereby measure the maximum width and maximum height of the core (in the case of the presence of an upper concave portion, the maximum height corresponds to the height to the bottom of the concave portion). The aspect ratio was calculated as the ratio of the smaller value of the maximum width and the maximum height to the larger value of the maximum width and the maximum height. The border between the core and the cladding was defined as a point having a brightness equal to the average of the maximum brightness and the minimum brightness ((the maximum brightness + the minimum brightness)/2) of pixels on a straight line including the line segments of the core and the cladding.

### [Examples 2 and 3 and Comparative Examples 1 and 2]

Example 3 is not an example according to the claimed invention. Optical waveguides were produced in the same manner as in Example 1, except that the materials and the conditions were varied as shown in Table 2. The cross-sectional shape of each optical waveguide was observed for evaluation. The results are shown in FIGS. 13 to 16 and Table 2.

**Table 2**

| | Core-forming material | Cladding-forming material | Viscosity ratio | Core-forming material discharge pressure [kPa] | Discharge unit moving speed [mm/sec] | Metallic needle inner diameter [µm] | Metallic needle height [µm] | Optical waveguide cross-sectional shape/aspect ratio |
|---|---|---|---|---|---|---|---|---|
| Example 1 | Curable composition 1 | Curable composition 2 | 5.7 | 550 | 14 | 150 | 270 | A 0.97 |
| Example 2 | Curable composition 2 | Curable composition 4 | 2.4 | 96.5 | 14 | 150 | 270 | A 0.91 |
| Example 3 | Curable composition 3 | Curable composition 4 | 1.2 | 50 | 18 | 150 | 270 | A 0.96 |
| Comparative Example 1 | Curable composition 1 | Curable composition 4 | 13.5 | 550 | 14 | 150 | 270 | C1 0.67 |
| Comparative Example 2 | Curable composition 3 | Curable composition 2 | 0.52 | 50 | 18 | 150 | 270 | C2 0.78 |

As shown in FIGS. 12 to 14, the optical waveguides of Examples 1 to 3, in which the ratio of the viscosity of the core-forming material (the material for forming the uncured core) to the viscosity of the cladding-forming material (the uncured cladding) was 1.2 to 5.7, were found to have a core exhibiting a substantially circular (nearly true circular) cross-sectional shape with a diameter of about 50 µm (Examples 1 and 2) or about 30 µm (Example 3).

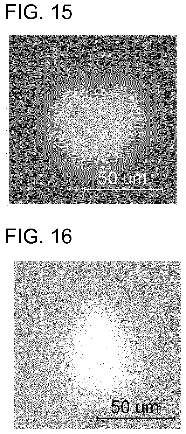

In contrast, the optical waveguide of Comparative Example 1, in which the viscosity ratio was 13.5; i.e., in excess of a predetermined range (1 to 6), was found to have a core exhibiting a horizontally elliptical cross-sectional shape with an upper concave portion (FIG. 15).

Meanwhile, the optical waveguide of Comparative Example 2, in which the viscosity ratio was 0.52; i.e., below the predetermined range, was found to have a core exhibiting a vertically elliptical cross-sectional shape with an upper convex portion (FIG. 16).

According to the method for manufacturing an optical waveguide of the present invention, when the ratio of the viscosity of the core-forming material to that of the cladding-forming material was adjusted to fall within a specific range as described above, the resultant optical waveguide had a core exhibiting a substantially circular (nearly true circular) cross-sectional shape.

### Description of the Reference Numerals

10: Optical waveguide
11, 12, 13, 14: Core
11A, 12A, 13A, 14A: Uncured core
19: Cladding
19A: Uncured cladding
91: Support
92: Bottom plate
93: Outer frame
94: Discharge unit
95: Discharge unit body
96: Acicular section
H₁: Height

## Claims

1. A method for manufacturing an optical waveguide (10), comprising:
a first step of inserting an acicular section (96) at the tip of a discharge unit (94) into an uncured cladding (19A) ;
a second step of moving the acicular section (96) within the uncured cladding (19A) while discharging an uncured material from the acicular section (96), to thereby form an uncured core (11A, 12A, 13A, 14A) surrounded by the uncured cladding (19A);
a third step of removing the acicular section (96) from the uncured cladding (19A); and a fourth step of curing the uncured cladding (19A) and the uncured core (11A, 12A, 13A, 14A), wherein :
the ratio of the viscosity of the material for forming the uncured core (11A, 12A, 13A, 14A) to the viscosity of the uncured cladding (19A) is 1.5 to 6 at the temperature in the second step and wherein
the moving speed of the acicular section (96) is 5 to 30 mm/s; and/or
the discharge pressure of the acicular section (96) is 10 to 1,000 kPa.

2. The manufacturing method according to claim 1, wherein
a series of the first step, the second step, and the third step is repeated between the third step and the fourth step, to thereby form a plurality of uncured cores (11A, 12A, 13A, 14A) surrounded by the uncured cladding (19A).

3. The manufacturing method according to claim 1 or 2, wherein
the optical waveguide (10) has a structure such that the refractive index of the core (11, 12, 13, 14) in a cross section of the optical waveguide (10) is highest at the center of the core (11, 12, 13, 14) and continuously decreases toward the outer periphery of the core (11, 12, 13, 14) .

4. The manufacturing method according to any one of the preceding claims, wherein
the ratio of the viscosity of the material for forming the uncured core (11A, 12A, 13A, 14A) to the viscosity of the uncured cladding (19A) is 1.5 to 4 at the temperature in the second step.

5. The manufacturing method according to claim 2, wherein
a plurality of cores (11, 12, 13, 14) are formed and the pitch between adjacent cores (11, 12, 13, 14) is adjusted to 20 to 300 mm.

6. The manufacturing method according to any one of the preceding claims, wherein
the moving speed of the acicular section (96) is 5 to 30 mm/s; and the discharge pressure of the acicular section (96) is 10 to 1,000 kPa

## Patentansprüche

1. Verfahren zur Herstellung von einem optischen Wellenleiter (10), umfassend:
einen ersten Schritt des Einführens einer nadelförmigen Sektion (96) an der Spitze einer Abgabeeinheit (94) in eine ungehärtete Ummantelung (19A);
einen zweiten Schritt des Bewegens der nadelförmigen Sektion (96) innerhalb der ungehärteten Ummantelung (19A), während ein ungehärtetes Material von der nadelförmigen Sektion (96) abgegeben wird, um dadurch einen ungehärteten Kern (11A, 12A, 13A, 14A) auszubilden, der von der ungehärteten Ummantelung (19A) umgeben ist;
einem dritten Schritt des Entfernens der nadelförmigen Sektion (96) von der ungehärteten Ummantelung (19A); und einem vierten Schritt des Härtens der ungehärteten Ummantelung (19A) und des ungehärteten Kerns (11A, 12A, 13A, 14A), wobei:
das Verhältnis der Viskosität des Materials zum Ausbilden des ungehärteten Kerns (11A, 12A, 13A, 14A) zur Viskosität der ungehärteten Ummantelung (19A) bei der Temperatur im zweiten Schritt 1,5 bis 6 beträgt, und wobei
die Bewegungsgeschwindigkeit der nadelförmigen Sektion (96) 5 bis 30 mm/s beträgt; und/oder
der Abgabedruck der nadelförmigen Sektion (96) 10 bis 1000 kPa beträgt.

2. Verfahren zur Herstellung nach Anspruch 1, wobei
eine Reihe des ersten Schritts, des zweiten Schritts und des dritten Schritts zwischen dem dritten Schritt und dem vierten Schritt wiederholt wird, um dadurch eine Vielzahl von ungehärteten Kernen (11A, 12A, 13A, 14A) auszubilden, die von der ungehärteten Ummantelung (19A) umgeben sind.

3. Verfahren zur Herstellung nach Anspruch 1 oder 2, wobei
der optische Wellenleiter (10) eine solche Struktur aufweist, dass der Brechungsindex des Kerns (11, 12, 13, 14) in einem Querschnitt des optischen Wellenleiters (10) in der Mitte des Kerns (11, 12, 13, 14) am höchsten ist und zum äußeren Umfang des Kerns (11, 12, 13, 14) hin kontinuierlich abnimmt.

4. Verfahren zur Herstellung nach einem der vorhergehenden Ansprüche, wobei
das Verhältnis der Viskosität des Materials zum Ausbilden des ungehärteten Kerns (11A, 12A, 13A, 14A) zur Viskosität der ungehärteten Ummantelung (19A) bei der Temperatur im zweiten Schritt 1,5 bis 4 beträgt.

5. Verfahren zur Herstellung nach Anspruch 2, wobei
eine Vielzahl von Kernen (11, 12, 13, 14) ausgebildet wird und die Neigung zwischen angrenzenden Kernen (11, 12, 13, 14) auf 20 bis 300 mm angepasst wird.

6. Verfahren zur Herstellung nach einem der vorhergehenden Ansprüche, wobei
die Bewegungsgeschwindigkeit der nadelförmigen Sektion (96) 5 bis 30 mm/s beträgt; und der Abgabedruck der nadelförmigen Sektion (96) 10 bis 1000 kPa beträgt.

## Revendications

1. Procédé de fabrication d'un guide d'ondes optique (10), comprenant :
une première étape destinée à insérer une section aciculaire (96) au bout d'une unité de décharge (94) dans un revêtement non durci (19A) ;
une deuxième étape destinée à déplacer la section aciculaire (96) à l'intérieur du revêtement non durci (19A) tout en déchargeant un matériau non durci à partir de la section aciculaire (96), pour ainsi former une âme non durcie (11A, 12A, 13A, 14A) entourée par le revêtement non durci (19A) ;
une troisième étape destinée à enlever la section aciculaire (96) du revêtement non durci (19A) ; et une quatrième étape destinée à durcir le revêtement non durci (19A) et l'âme non durcie (11A, 12A, 13A, 14A), dans lequel :
le rapport de la viscosité du matériau destiné à former l'âme non durcie (11A, 12A, 13A, 14A) sur la viscosité du revêtement non durci (19A) est de 1,5 à 6 à la température dans la deuxième étape et dans lequel
la vitesse de déplacement de la section aciculaire (96) est de 5 à 30 mm/s ; et/ou
la pression de décharge de la section aciculaire (96) est de 10 à 1000 kPa.

2. Procédé de fabrication selon la revendication 1, dans lequel
une série composée de la première étape, la deuxième étape, et la troisième étape est répétée entre la troisième étape et la quatrième étape, pour ainsi former une pluralité d'âmes non durcies (11A, 12A, 13A, 14A) entourées par le revêtement non durci (19A).

3. Procédé de fabrication selon la revendication 1 ou la revendication 2, dans lequel
le guide d'ondes optique (10) présente une structure de telle sorte que l'indice de réfraction de l'âme (11, 12, 13, 14) dans une section transversale du guide d'ondes optique (10) soit le plus élevé au centre de l'âme (11, 12, 13, 14) et diminue continuellement vers la périphérie extérieure de l'âme (11, 12, 13, 14).

4. Procédé de fabrication selon l'une quelconque des revendications précédentes, dans lequel
le rapport de la viscosité du matériau destiné à former l'âme non durcie (11A, 12A, 13A, 14A) sur la viscosité du revêtement non durci (19A) est de 1,5 à 4 à la température dans la deuxième étape.

5. Procédé de fabrication selon la revendication 2, dans lequel
une pluralité d'âmes (11, 12, 13, 14) est formée et le pas entre des âmes adjacentes (11, 12, 13, 14) est réglé de 20 à 300 mm.

6. Procédé de fabrication selon l'une quelconque des revendications précédentes, dans lequel
la vitesse de déplacement de la section aciculaire (96) est de 5 à 30 mm/s ; et la pression de décharge de la section aciculaire (96) est de 10 à 1000 kPa.
